# EUROPÄISCHE PATENTSCHRIFT

(11) **EP 3 529 679 B1**
(45) Veröffentlichungstag und Bekanntmachung des Hinweises auf die Patenterteilung: **08.07.2020**
(21) Anmeldenummer: 17751714.1
(22) Anmeldetag: 08.08.2017
(51) Int. Cl.: G05D 1/00, B60W 30/12, B60W 30/16, B60W 30/08

(54) **VERFAHREN UND VORRICHTUNG ZUM UNTERSTÜTZEN EINES FAHRERS BEIM DEAKTIVIEREN EINES HOCHAUTOMATISIERTEN FAHRMODUS EINES FAHRZEUGS**
METHOD AND DEVICE FOR ASSISTING A DRIVER WITH DEACTIVATING A HIGHLY AUTOMATED DRIVING MODE OF A VEHICLE
PROCÉDÉ ET DISPOSITIF POUR ASSISTER UN CONDUCTEUR DANS LA DÉSACTIVATION D'UN MODE DE CONDUITE HAUTEMENT AUTOMATISÉE D'UN VÉHICULE

(30) Priorität: 20.10.2016 DE 102016220549
(43) Veröffentlichungstag der Anmeldung: 28.08.2019
(73) Patentinhaber: Robert Bosch GmbH, 70442 Stuttgart (DE)
(72) Erfinder: EISELE, Sybille, 74394 Hessigheim (DE); SAUTTER, Peter, 74348 Lauffen (DE); FOLTIN, Johannes, 71254 Ditzingen (DE); WULF, Felix, 71636 Ludwigsburg (DE); VANDOMMELE, Tjark, 70499 Stuttgart (DE); MARBERGER, Claus, 71263 Weil der Stadt (DE); FLEHMIG, Folko, 70192 Stuttgart (DE)
(86) Internationale Anmeldenummer: PCT/EP2017/070083
(87) Internationale Veröffentlichungsnummer: WO 2018/072911

(56) Entgegenhaltungen:
- EP-A1- 2 848 488
- EP-A1- 3 192 695
- DE-A1-102012 223 758
- DE-A1-102014 225 680

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Beim hochautomatisierten Fahren sollte die Fahrzeugkontrolle an Systemgrenzen mit einer ausreichenden Zeitreserve wieder durch den Fahrer übernommen werden. Als ausreichend werden beispielsweise Zeitdauern zwischen 4 und 10 Sekunden betrachtet. Hierbei kann der Automatisierungsgrad von hochautomatisiert nach manuell wechseln. Ebenso kann der Fahrer die Automatisierung auch ohne Aufforderung beispielsweise per Schalter deaktivieren und damit in den manuellen Fahrmodus wechseln.

Fahrerüberwachungskameras erkennen beispielsweise eine Blickrichtung des Fahrers und können anhand verschiedener Augenparameter wie etwa Lidschlag oder Augenbewegungen einen Müdigkeitszustand des Fahrers erkennen. Bei erkannter Fahrermüdigkeit kann ein entsprechendes System beispielsweise darauf hinweisen, dass eine Pause gemacht werden soll. Die Analyse der Blickrichtung kann zur Schätzung der visuellen Aufmerksamkeit und damit zur Ausgabe von Warnungen an den abgelenkten Fahrer genutzt werden.

### Offenbarung der Erfindung

Die Druckschrift DE 10 2014 225680 A1 offenbart ein Verfahren und eine Vorrichtung zur Übernahmeaufforderung einer Fahraufgabe an den Fahrzeugführer eines Fahrzeugs im Rahmen des automatischen Fahrens des Fahrzeugs.

Die Druckschrift EP 2 848 488 A1 offenbart ein Verfahren und eine Anordnung zur Übergabewarnung in einem Fahrzeug, das autonome Fahrfähigkeiten aufweist.

Die Druckschrift DE 10 2012 223758 A1 offenbart ein System und ein Verfahren zum Wechsel der Fahrsteuerung bei einem autonomen Fahrzeug.

Vor diesem Hintergrund werden mit dem hier vorgestellten Ansatz ein Verfahren zum Unterstützen eines Fahrers beim Deaktivieren eines hochautomatisierten

Fahrmodus eines Fahrzeugs, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Verfahren zum Unterstützen eines Fahrers beim Deaktivieren eines hochautomatisierten Fahrmodus eines Fahrzeugs vorgestellt, wobei das Verfahren folgende Schritte umfasst:
Einlesen eines Übernahmesignals, das ein Übernehmen einer Steuerung des Fahrzeugs durch den Fahrer repräsentiert, und einer Hilfsinformation, die eine den Fahrer repräsentierende Bildinformation und/oder eine eine Kontrolle des Fahrzeugs durch den Fahrer repräsentierende Fahrzeugkontrollinformation umfasst;

Bestimmen eines Aufmerksamkeitsgrades des Fahrers unter Verwendung des Übernahmesignals und der Hilfsinformation; und

Ausgeben eines Unterstützungssignals unter Verwendung des Aufmerksamkeitsgrades, um den Fahrer durch Ansteuern zumindest einer Fahrerassistenzfunktion des Fahrzeugs beim Übernehmen der Steuerung zu unterstützen.

Unter einem Fahrzeug kann ein Kraftfahrzeug wie beispielsweise ein Personen- oder Lastkraftwagen verstanden werden. Insbesondere kann es sich bei dem Fahrzeug um ein hochautomatisiertes Fahrzeug handeln, das ohne Eingreifen eines Fahrers selbstständig fahren kann. Dementsprechend kann unter einem hochautomatisierten Fahrmodus eine Betriebsart des Fahrzeugs verstanden werden, in der das Fahrzeug ohne Eingreifen des Fahrers automatisch gesteuert wird. Das Übernahmesignal kann beispielsweise erzeugt werden, wenn der Fahrer ein Lenkrad, ein Brems- oder Gaspedal oder ein sonstiges Steuerelement des Fahrzeugs berührt oder betätigt. Bei der Bildinformation kann es sich um eine unter Verwendung einer Fahrerbeobachtungseinrichtung des Fahrzeugs, etwa einer Innenraumkamera, erzeugte Information handeln. Die Bildinformation kann je nach Ausführungsform kontinuierlich oder ansprechend auf die Übernahme der Steuerung durch den Fahrer bereitgestellt werden. Bei der Fahrzeugkontrollinformation kann es sich um eine Informationen handeln, die durch Auswerten der Gleichmäßigkeit von Lenkbewegungen absolut und/oder relativ zur Fahrspur und deren Markierung gewonnen wird. Zusätzlich oder alternativ kann die Fahrzeugkontrollinformation aus einer Gleichmäßigkeit im longitudinalen Fahrverhalten wie Bremsen, Beschleunigen und Halten einer Geschwindigkeit, absolut und/oder in Bezug auf andere Verkehrsteilnehmer, ermittelt werden. Die Fahrzeugkontrollinformation kann beispielsweise auch eine Schnelligkeit der Übernahme der Steuerung durch den Fahrer repräsentieren. Repräsentiert die Fahrzeugkontrollinformation für eine konkrete Situation eine zu schnelle Übernahme, d. h. eine Übernahme, deren Dauer eine vorgegebene Mindestübernahmedauer unterschreitet, so kann beispielsweise auf eine assistenzbedürftige Übernahmesituation geschlossen werden.

Prinzipiell kann der Aufmerksamkeitsgrad auch unabhängig von der Fahrerüberwachung erfolgen, beispielsweise wenn keine Kamera vorhanden ist oder die erfassten Bilder nicht den erforderlichen Kriterien entsprechen, etwa weil die Kamera blind oder verkratzt ist oder der Fahrer eine Sonnenbrille trägt. Dann wäre es möglich, eine Übergabephase der Maximaldauer zu nutzen, die beendet wird, sobald Qualitätskriterien der manuellen Fahrzeugkontrolle eingehalten werden.

Unter einem Aufmerksamkeitsgrad kann ein Maß für ein Situationsbewusstsein des Fahrers bezüglich einer aktuellen Fahrsituation verstanden werden. Beispielsweise kann der Aufmerksamkeitsgrad durch ein Blickverhalten, d. h. durch die Art und Weise einer visuellen Absicherung des Fahrers, charakterisiert sein. Das Unterstützungssignal kann beispielsweise ausgegeben werden, um den Fahrer bei der Übernahme der Steuerung während einer zeitlich begrenzten Übergangsphase durch entsprechendes Ansteuern der Fahrerassistenzfunktion zu unterstützen. Unter einer Fahrerassistenzfunktion kann eine Funktion des Fahrzeugs verstanden werden, durch die der Fahrer beim Führen des Fahrzeugs automatisch unterstützt wird. Beispielsweise kann es sich bei der Fahrerassistenzfunktion um eine Spurhaltefunktion, eine automatische Bremsfunktion oder eine Spurwechselfunktion handeln.

Der hier vorgestellte Ansatz beruht auf der Erkenntnis, dass ein Fahrer beim Übernehmen einer manuellen Steuerung eines hochautomatisierten Fahrzeugs durch bestimmte Fahrerassistenzfunktionen vorübergehend unterstützt werden kann. Beispielsweise kann eine entsprechende Fahrerübergabestrategie an die Eigenschaften des Fahrers angepasst werden. So können dem Fahrer beim Übernehmen der Fahraufgabe beispielsweise in Abhängigkeit von einem Situationsbewusstsein des Fahrers und einer Qualität der manuellen Fahrzeugführung spezifisch unterstützende Assistenzsysteme während einer Assistenzphase zur Verfügung gestellt werden.

Sobald der Fahrer beispielsweise nach einer Übernahmeaufforderung einen hochautomatisierten Fahrmodus deaktiviert, verfügt er über die volle Kontrolle über das Fahrzeug und ist für die Sicherheit der Fahrzeugführung voll verantwortlich. Insbesondere nach längerer hochautomatisierter Fahrt und bei schnellen Übernahmereaktionen des Fahrers kann es dabei zu einer vergleichsweise unsicheren Fahrphase kommen, da unter Umständen das Bewusstsein für die aktuelle Fahrsituation und das Risiko bestimmter Fahrmanöver noch nicht ausreichend ausgebildet ist. Der hier vorgestellte Ansatz schafft nun ein Konzept einer assistierten Übergabe, die in Art, Intensität und Dauer gemäß Fahrerzustand und -leistung derart angepasst werden kann, dass das Sicherheitsrisiko beim Wechseln in einen manuellen Fahrmodus deutlich reduziert werden kann.

Gemäß einer Ausführungsform kann im Schritt des Bestimmens unter Verwendung der Bildinformation ein Blickverhalten des Fahrers analysiert werden, um den Aufmerksamkeitsgrad zu bestimmen. Unter einem Blickverhalten kann die Art und Weise einer visuellen Absicherung von Bereichen rund um das Fahrzeug durch den Fahrer verstanden werden. Das Blickverhalten kann beispielsweise durch eine Blickrichtung des Fahrers, eine Dauer, während der die Blickrichtung beibehalten wird, oder eine Geschwindigkeit eines Wechsels zwischen verschiedenen Blickrichtungen charakterisiert sein. Dadurch kann der Aufmerksamkeitsgrad zuverlässig bestimmt werden.

Gemäß einer weiteren Ausführungsform kann im Schritt des Einlesens eine eine Fahrsituation des Fahrzeugs repräsentierende Fahrsituationsinformation eingelesen werden, wobei im Schritt des Bestimmens das Blickverhalten unter Verwendung der Fahrsituationsinformation bewertet werden kann, um den Aufmerksamkeitsgrad zu bestimmen. Die Fahrsituation kann beispielsweise eine durch eine Verkehrslage, eine Art einer von dem Fahrzeug befahrenen Straße, eine Anzahl anderer Verkehrsteilnehmer, eine Geschwindigkeit des Fahrzeugs oder eine Beschilderung charakterisierte Situation des Fahrzeugs verstanden werden. Unter einer Fahrsituationsinformation kann beispielsweise eine von einem Umfeldsensor des Fahrzeugs oder einer digitalen Karte bereitgestellte Information verstanden werden. Durch diese Ausführungsform kann der Aufmerksamkeitsgrad unter Berücksichtigung der Fahrsituation des Fahrzeugs bestimmt werden.

Des Weiteren kann im Schritt des Ausgebens das Unterstützungssignal ausgegeben werden, um eine Kollisionswarnfunktion, eine automatische Bremsfunktion, eine Spurwechselwarnfunktion oder eine Spurhaltefunktion des Fahrzeugs oder eine Kombination aus zumindest zwei der genannten Assistenzfunktionen anzusteuern, wenn der Aufmerksamkeitsgrad eine einem Front-, Seiten- und/oder Heckbereich des Fahrzeugs abgewandte Blickrichtung des Fahrers repräsentiert. Dadurch können Kollisionen des Fahrzeugs mit benachbarten Fahrzeugen verhindert werden.

Beispielsweise kann im Schritt des Ausgebens das Unterstützungssignal ausgegeben werden, um die Spurwechselwarnfunktion und/oder die Spurhaltefunktion anzusteuern, wenn der Aufmerksamkeitsgrad ein dem Seiten- und/oder Heckbereich des Fahrzeugs abgewandte Blickrichtung des Fahrers repräsentiert. Dadurch können gefährliche Spurwechsel und/oder ein unbeabsichtigtes Abdriften aus der Spur verhindert werden.

Gemäß einer weiteren Ausführungsform kann in einem Schritt des Analysierens unter Verwendung des Übernahmesignals ein Lenkverhalten des Fahrzeugs oder, zusätzlich oder alternativ, ein Beschleunigungsverhalten des Fahrzeugs analysiert werden, um einen Gütewert bezüglich der Steuerung des Fahrzeugs durch den Fahrer zu erhalten. Entsprechend kann im Schritt des Ausgebens das Unterstützungssignal unter Verwendung des Gütewerts ausgegeben werden. Dadurch ist es möglich, Fehlern beim manuellen Steuern des Fahrzeugs effizient entgegenzuwirken.

Hierbei kann im Schritt des Ausgebens das Unterstützungssignal ausgegeben werden, um eine Spurhaltefunktion des Fahrzeugs anzusteuern, wenn der Gütewert eine Variation einer Spurposition des Fahrzeugs außerhalb eines vorgegebenen Toleranzbereichs repräsentiert. Unter einem Toleranzbereich kann ein Bereich zwischen zwei Grenzwerten verstanden werden, innerhalb dessen eine Variation der Spurposition als nicht kritisch eingestuft wird. Durch diese Ausführungsform kann das Fahrzeug beim Wechseln in den manuellen Fahrmodus stabil in der Spur gehalten werden.

Dieses Verfahren kann beispielsweise in Software oder Hardware oder in einer Mischform aus Software und Hardware, beispielsweise in einem Steuergerät, implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung des Fahrzeugs. Hierzu kann die Vorrichtung beispielsweise auf Sensorsignale wie Beschleunigungs-, Druck-, Lenkwinkel-, Fahrzeuginnenraum- oder Umfeldsensorsignale zugreifen. Die Ansteuerung erfolgt über Aktoren wie Brems- oder Lenkaktoren oder ein Motorsteuergerät des Fahrzeugs.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine schematische Darstellung eines Fahrzeugs mit einer Vorrichtung gemäß einem Ausführungsbeispiel;
Fig. 2 eine schematische Darstellung einer Vorrichtung gemäß einem Ausführungsbeispiel;
Fig. 3 eine schematische Darstellung eines Ablaufs einer assistierten Übernahme unter Verwendung einer Vorrichtung gemäß einem Ausführungsbeispiel;
Fig. 4 eine schematische Darstellung von Überwachungsbereichen um ein Fahrzeug aus Fig. 1; und
Fig. 5 ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

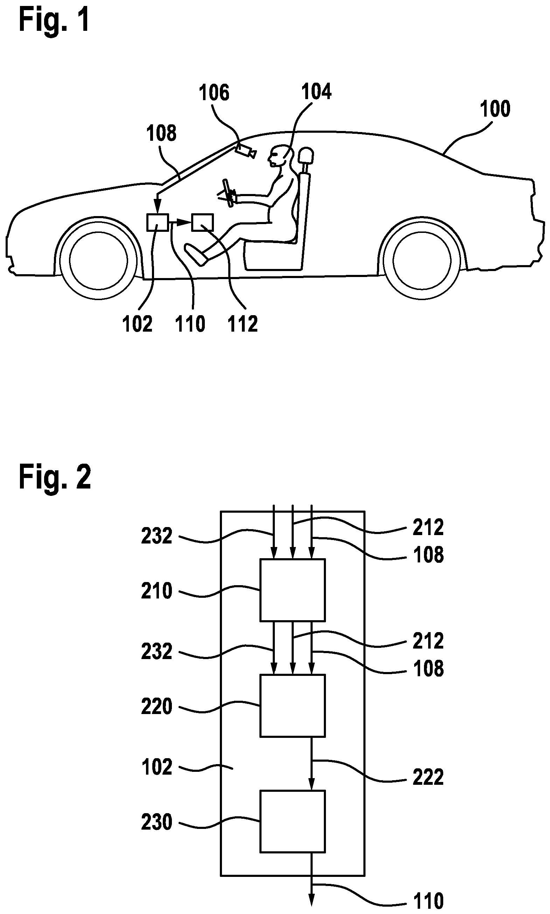

Fig. 1 zeigt eine schematische Darstellung eines Fahrzeugs 100 mit einer Vorrichtung 102 gemäß einem Ausführungsbeispiel. Bei dem Fahrzeug 100 handelt es sich um ein sowohl automatisiert als auch manuell steuerbares Fahrzeug. Fig. 1 zeigt das Fahrzeug 100 beim Wechsel von einem hochautomatisierten Fahrmodus, in dem die Steuerung des Fahrzeugs 100 automatisch erfolgt, in einen manuellen Fahrmodus, in dem das Fahrzeug 100 durch einen Fahrer 104 gesteuert wird. Hierbei bestimmt die Vorrichtung 102 unter Verwendung einer von einer Fahrerbeobachtungseinrichtung 106 bereitgestellten Bildinformation 108, hier einer Innenraumkamera, einen Aufmerksamkeitsgrad des Fahrers 104. Der Aufmerksamkeitsgrad wird beispielsweise in Abhängigkeit von einem durch die Bildinformation 108 repräsentierten Blickverhalten des Fahrers 104 bestimmt. Je nach Aufmerksamkeitsgrad gibt die Vorrichtung 102 ein Unterstützungssignal 110 aus, das zur Ansteuerung zumindest einer Funktion eines Fahrerassistenzsystems 112 des Fahrzeugs 100 dient, etwa um das Fahrverhalten zu stabilisieren. Dadurch können Unfälle beim Wechseln in den manuellen Fahrmodus vermieden werden.

Fig. 2 zeigt eine schematische Darstellung einer Vorrichtung 102 gemäß einem Ausführungsbeispiel, etwa einer vorangehend anhand von Fig. 1 beschriebenen Vorrichtung. Die Vorrichtung 102 umfasst eine Einleseeinheit 210 zum Einlesen eines Übernahmesignals 212, das die Übernahme der Steuerung durch den Fahrer repräsentiert. Des Weiteren ist die Einleseeinheit 210 ausgebildet, um die Bildinformation 108 von der Fahrerbeobachtungseinrichtung einzulesen. Die Einleseeinheit 210 leitet das Übernahmesignal 212 und die Bildinformation 108 an eine Bestimmungseinheit 220 weiter, die ausgebildet ist, um ansprechend auf ein Empfangen des Übernahmesignals 212 den Aufmerksamkeitsgrad des Fahrers unter Verwendung der Bildinformation 108 zu bestimmen und ein den Aufmerksamkeitsgrad repräsentierendes Aufmerksamkeitssignal 222 an eine Ausgabeeinheit 230 der Vorrichtung 102 weiterzuleiten. Die Ausgabeeinheit 230 ist ausgebildet, um unter Verwendung des Aufmerksamkeitssignals 222 das Unterstützungssignal 110 auszugeben.

Gemäß einem Ausführungsbeispiel bestimmt die Bestimmungseinheit 220 den Aufmerksamkeitsgrad anhand einer Analyse eines Blickverhaltens des Fahrers unter Verwendung der Bildinformation 108. Hierbei ist es vorteilhaft, wenn die Einleseeinheit 210 eine optionale Fahrsituationsinformation 232 bezüglich einer aktuellen Fahrsituation einliest und an die Bestimmungseinheit 220 weiterleitet. Die Fahrsituationsinformation 232 wird beispielsweise von der Bestimmungseinheit 220 verwendet, um zum Bestimmen des Aufmerksamkeitsgrades eine Bewertung des Blickverhaltens angesichts der durch die Fahrsituationsinformation 232 repräsentierten Fahrsituation durchzuführen.

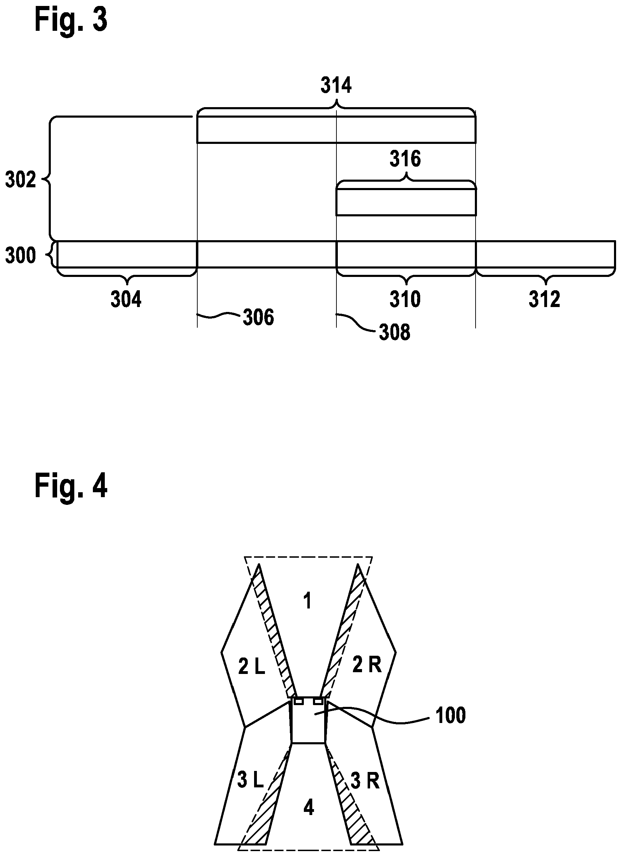

Fig. 3 zeigt eine schematische Darstellung eines Ablaufs einer assistierten Übernahme unter Verwendung einer Vorrichtung gemäß einem Ausführungsbeispiel, etwa einer Vorrichtung, wie sie vorangehend anhand der Figuren 1 und 2 beschrieben ist. Gezeigt sind ein Systemstatus 300 sowie ein Überwachungsstatus 302 einer Fahrerüberwachung. Zu Beginn des Ablaufs gibt ein hochautomatisiertes System 304 des Fahrzeugs bei Erkennung einer Systemgrenze zu einem Aufforderungszeitpunkt 306 eine Übernahmeaufforderung an den Fahrer aus. Die Hochautomatisierung wird dabei möglichst für eine gewisse Zeitreserve aufrechterhalten. Nach der Übernahme durch den Fahrer zu einem Übernahmezeitpunkt 308 wechselt das System je nach Bewertung des Fahrerverhaltens in eine Übergangsphase 310 mit manueller Steuerbarkeit und spezifisch zugeschalteten Assistenzfunktionen. Die Übergangsphase 310 mündet schließlich in den Zielzustand "manuelles Fahren", gekennzeichnet durch einen Block 312.

Ab dem Aufforderungszeitpunkt 306 erfolgt die Überwachung eines Situationsbewusstseins des Fahrers, gekennzeichnet durch einen Block 314. Ab dem Übernahmezeitpunkt 308 erfolgt die Überwachung einer Fahrerleistung, etwa anhand eines Lenk- oder Beschleunigungsverhaltens des Fahrzeugs. Die Überwachung der Fahrerleistung ist durch einen Block 316 gekennzeichnet. Sowohl die Überwachung des Situationsbewusstseins als auch die Überwachung der Fahrerleistung werden beispielsweise zum Ende der Übergangsphase 310 beendet.

Fig. 4 zeigt eine schematische Darstellung von Überwachungsbereichen um ein Fahrzeug 100 aus Fig. 1. Das Fahrzeug 100 ist in der Draufsicht gezeigt. Gezeigt sind ein Frontbereich 1, ein linker vorderer Seitenbereich 2L, ein rechter vorderer Seitenbereich 2R, ein linker hinterer Seitenbereich 3L, ein rechter hinterer Seitenbereich 3R sowie ein Heckbereich 4. Bei den Überwachungsbereichen handelt es sich beispielsweise um Bereiche rund um das Fahrzeug, die der Fahrer bei der Übernahme der Steuerung visuell absichern sollte.

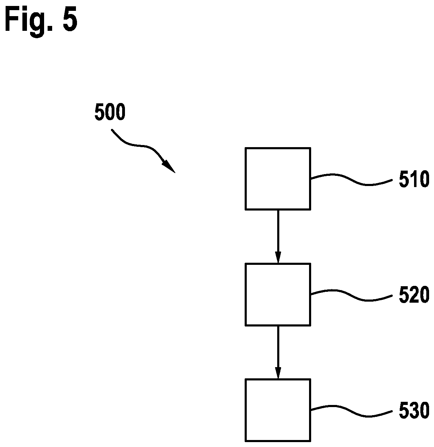

Fig. 5 zeigt ein Ablaufdiagramm eines Verfahrens 500 gemäß einem Ausführungsbeispiel. Das Verfahren 500 kann beispielsweise im Zusammenhang mit einer vorangehend anhand der Figuren 1 bis 4 beschriebenen Vorrichtung durchgeführt werden. Hierbei werden in einem Schritt 510 das Übernahmesignal und die Bildinformation eingelesen. In einem Schritt 520 erfolgt die Bestimmung des Aufmerksamkeitsgrades unter Verwendung des Übernahmesignals und der Bildinformation. In einem Schritt 530 wird unter Verwendung des Aufmerksamkeitsgrades das Unterstützungssignal zum Unterstützen des Fahrers durch Ansteuern zumindest einer Fahrerassistenzfunktion des Fahrzeugs ausgegeben.

Nachfolgend werden verschiedene Ausführungsbeispiele des hier vorgestellten Ansatzes anhand der Figuren 1 bis 5 nochmals mit anderen Worten beschrieben.

Gemäß einem Ausführungsbeispiel analysiert die bei der Hochautomatisierung stets aktive Fahrerbeobachtungseinrichtung 106 nach einer Übernahmeaufforderung das Blickverhalten des Fahrers 104, um daraus Rückschlüsse auf dessen Situationsbewusstsein für die aktuelle Fahrsituation zu ziehen. Die Anforderungen für das Blickverhalten werden beispielsweise aus der Art der Übernahmesituation abgeleitet. So reicht es beispielsweise aus, wenn bei einer Übernahme in unkritischen Fahrsituationen lediglich ein vorderer Verkehrsraum des Fahrzeugs 100 durch den Fahrer visuell abgesichert wird, während bei einem erforderlichen Brems- oder Spurwechselmanöver auch ein seitlicher und hinterer Bereich abgesichert werden sollte. Es folgt eine Bewertung des aktuellen Blickverhaltens gegenüber den Anforderungen der Fahrsituation. In Fig. 3 ist beispielhaft ein zugrunde liegender Ablauf einer Kontrollübernahme im Sinne des hier vorgestellten Ansatzes gezeigt.

Sobald der Fahrer die Hochautomatisierung durch einen der verfügbaren Mechanismen deaktiviert und damit die Fahrzeugkontrolle übernimmt, wechselt der Systemzustand in einen Übergangsmodus, bei dem die Fahrzeugkontrolle einerseits manuell vollumfänglich möglich ist, andererseits verfügbare Assistenz- und Sicherheitssysteme des Fahrzeugs 100 bedarfsgerecht zugeschaltet werden. Art und Intensität der nun aktivierten Systeme hängen vom eingeschätzten Situationsbewusstsein, d. h. vom über die Blickrichtung bestimmten Aufmerksamkeitsgrad des Fahrers 104, sowie von der Bewertung der manuellen Fahrerleistung ab.

Wird beispielsweise die Fahrzeugkontrolle übernommen, ohne dass der Fahrer 104 den vorderen Bereich, auch Frontbereich genannt, ausreichend abgesichert hat, so werden gemäß einem Ausführungsbeispiel Systeme zum Halten eines sicheren Abstands, etwa Kollisionswarnsysteme oder automatische Bremssysteme, in einer besonders empfindlichen Parametrierung aktiviert.

Wird bei einem eventuell erforderlichen Spurwechsel, etwa aufgrund eines Hindernisses auf der Fahrbahn, kein ausreichendes Absicherungsverhalten des Fahrers zur Seite bzw. nach hinten festgestellt, so werden gemäß einem weiteren Ausführungsbeispiel Spurwechselwarnsysteme und/oder Spurhalteassistenzsysteme in einer besonders empfindlichen Parametrierung aktiviert.

Wird nach einer Kontrollübernahme ohne akute Manöveranforderung eine übermäßig starke Variation einer Spurposition, etwa ein Pendeln innerhalb eines Fahrstreifens oder ein beispielsweise langsames Abdriften aus der Spur oder ein Verlassen der Spur, festgestellt, so werden gemäß einem weiteren Ausführungsbeispiel Systeme zur Verbesserung einer Spurhaltegüte, etwa in Form einer Spurmittenführungsassistenz oder Spurverlassenswarnung, in einer besonders empfindlichen Parametrierung aktiviert.

Wird die Kontrolle vom Fahrer ohne visuelle Absicherung gemäß üblichen Übernahmezeiten deutlich zu schnell übernommen, so kann davon ausgegangen werden, dass das Situationsbewusstsein generell schlecht ausgeprägt ist. In diesem Fall werden beispielsweise alle verfügbaren Sicherheitssysteme in einer besonders empfindlichen Parametrierung aktiviert.

Das Situationsbewusstsein für verschiedene Bereiche um das Fahrzeug wird beispielsweise als Zerfallsfunktion des Situationswissens modelliert. Es wird davon ausgegangen, dass Wissen über einen räumlich definierten Bereich durch Blickzuwendung aufgebaut und erhalten wird und bei Blickabwendung kontinuierlich abnimmt. Bei einer erneuten Blickzuwendung steigt das Wissen wiederum an. Mögliche Ausgabewerte des Wissensmodells sind Prozentangaben zwischen 0 und 100 Prozent und betreffen beispielsweise die in Fig. 4 gezeigten Überwachungsbereiche um das Fahrzeug 100.

Die Dauer der assistierten Übergangsphase 310 hängt beispielsweise von der Bewertung des Situationsbewusstseins bzw. der Qualität der manuellen Fahrzeugkontrolle ab. Bei ausreichendem Situationsbewusstsein bzw. Sicherungsverhalten des Fahrers 104 wird die Übergangsphase 310 etwa nach einer festzulegenden Minimaldauer beendet. Alternativ wird die Übergangsphase 310 beendet, sobald bestimmte Qualitätskriterien der manuellen Fahrzeugkontrolle, etwa ein mittlerer Gierwinkelfehler, einem individuellen Normalmaß entsprechen. Alternativ ist die Übergangsphase 310 unabhängig von der Fahrerüberwachung mit einer maximalen Dauer von beispielsweise 30 Sekunden festgelegt. Der assistierte Sicherheitsmodus wird, solange er aktiv ist, beispielsweise über ein geeignetes visuelles Symbol an den Fahrer kommuniziert. Nach der Übergangsphase 310 wechselt das System in den manuellen Fahrmodus, in dem gegebenenfalls die vom Fahrer 104 standardmäßig gewünschten Assistenzsysteme aktiv sind.

In einem weiteren Ausführungsbeispiel wird die Dauer der Übergabe ausschließlich auf Basis der Fahrzeugkontrollinformation, wie bestimmten Qualitätskriterien der manuellen Fahrzeugkontrolle, angepasst. Dabei kann auf die Bildinformation des Fahrers verzichtet werden, was das System besonders günstig und störungsfrei macht. Diese Ausführungsform kann beispielsweise genutzt werden, wenn die Bildinformation des Fahrers fehlt oder Qualitätskriterien der Bildinformation nicht ausreichend gut sind. Dies kann sein, wenn beispielsweise die Linse der Kamera verschmutzt ist, der Fahrerzustand durch Verdeckungen nicht mehr genau erkannt werden kann und/oder wenn beispielsweise die Versorgungsspannung der Fahrerüberwachungskamera ausgefallen ist, wodurch auch eine Fahrerübernahmeaufforderung angestoßen werden kann. In diesem Fall ist es sinnvoll, das Verfahren ausschließlich auf Basis der Fähigkeit des Fahrers zur Fahrzeugkontrolle sowie optional auf Basis von Umfeldsensorinformationen anzupassen.

Gemäß einem weiteren Ausführungsbeispiel wird der vorangehend beschriebene Ablauf auch bei einer fahrergetriggerten Übernahme ohne vorausgehende Übernahmeaufforderung angewandt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (500) zum Unterstützen eines Fahrers (104) beim Deaktivieren eines hochautomatisierten Fahrmodus eines Fahrzeugs (100), wobei das Verfahren (500) folgende Schritte umfasst:
Einlesen (510) eines Übernahmesignals (212), das ein Übernehmen einer Steuerung des Fahrzeugs (100) durch den Fahrer (104) repräsentiert, und einer Hilfsinformation, die eine den Fahrer (104) repräsentierende Bildinformation (108) und/oder eine eine Kontrolle des Fahrzeugs (100) durch den Fahrer (104) repräsentierende Fahrzeugkontrollinformation umfasst;
Bestimmen (520) eines Aufmerksamkeitsgrades des Fahrers (104) unter Verwendung des Übernahmesignals (212) und der Hilfsinformation; und Ausgeben (530) eines Unterstützungssignals (110) unter Verwendung des Aufmerksamkeitsgrades, um den Fahrer (104) durch Ansteuern zumindest einer Fahrerassistenzfunktion des Fahrzeugs (100) beim Übernehmen der Steuerung zu unterstützen,
wobei in dem Schritt des Bestimmens (520) unter Verwendung des Übernahmesignals (212) ein Lenk- und/der Beschleunigungsverhalten des Fahrzeugs (100) analysiert wird, um einen Gütewert bezüglich der Steuerung des Fahrzeugs (100) durch den Fahrer (104) zu erhalten, wobei im Schritt des Ausgebens (530) das Unterstützungssignal (110) unter Verwendung des Gütewerts ausgegeben wird
**dadurch gekennzeichnet, dass**
im Schritt des Ausgebens (530) das Unterstützungssignal (110) ausgegeben wird, um eine Spurhaltefunktion des Fahrzeugs (100) anzusteuern, wenn der Gütewert eine Variation einer Spurposition des Fahrzeugs (100) außerhalb eines vorgegebenen Toleranzbereichs repräsentiert.

2. Verfahren (500) gemäß Anspruch 1, bei dem im Schritt des Bestimmens (520) unter Verwendung der Bildinformation (108) ein Blickverhalten des Fahrers (104) analysiert wird, um den Aufmerksamkeitsgrad zu bestimmen.

3. Verfahren (500) gemäß Anspruch 2, bei dem Schritt des Einlesens (510) eine eine Fahrsituation des Fahrzeugs (100) repräsentierende Fahrsituationsinformation (232) eingelesen wird, wobei im Schritt des Bestimmens (520) das Blickverhalten unter Verwendung der Fahrsituationsinformation (232) bewertet wird, um den Aufmerksamkeitsgrad zu bestimmen.

4. Verfahren (500) gemäß Anspruch 2 oder 3, bei dem im Schritt des Ausgebens (530) das Unterstützungssignal (110) ausgegeben wird, um eine Kollisionswarnfunktion und/oder eine automatische Bremsfunktion und/oder eine Spurwechselwarnfunktion und/oder eine Spurhaltefunktion des Fahrzeugs (100) anzusteuern, wenn der Aufmerksamkeitsgrad eine einem Front- (1) und/oder Seiten- (2L, 2R, 3L, 3R) und/oder Heckbereich (4) des Fahrzeugs (100) abgewandte Blickrichtung des Fahrers (104) repräsentiert.

5. Vorrichtung (102) mit Einheiten (210, 220, 230), die ausgebildet sind, um das Verfahren (500) gemäß einem der Ansprüche 1 bis 4 auszuführen und/oder anzusteuern.

6. Computerprogramm, das ausgebildet ist, um das Verfahren (500) gemäß einem der Ansprüche 1 bis 4 auszuführen und/oder anzusteuern.

7. Maschinenlesbares Speichermedium, auf dem das Computerprogramm nach Anspruch 8 gespeichert ist.

## Claims

1. Method (500) for assisting a driver (104) with deactivating a highly automated driving mode of a vehicle (100), wherein the method (500) comprises the following steps:
Reading in (510) an assumption signal (212) which represents assuming control of the vehicle (100) by the driver (104), and reading in (510) auxiliary information which comprises image information (108) representing the driver (104) and/or the vehicle checking information representing checking of the vehicle (100) by the driver (104);
Determining (520) a degree of attentiveness of the driver (104) using the assumption signal (212) and the auxiliary information; and
Outputting (530) an assistance signal (110) using the degree of attention in order to assist the driver (104) by actuating at least one driver assistance system function of the vehicle (100) when the control is assumed,
wherein in the determining step (520) using the assumption signal (212) a steering and/or acceleration behaviour of the vehicle (100) is analyzed in order to obtain a quality value relating to the control of the vehicle (100) by the driver (104), wherein in the outputting step (530) the assistance signal (110) is output using the quality value,
**characterized in that**
in the outputting step (530) the assistance signal (110) is output in order to actuate a lane-keeping function of the vehicle (100) if the quality value represents a variation of a lane positioning of the vehicle (100) outside a predefined tolerance range.

2. Method (500) according to Claim 1, in which in the determining step (520) using the image information (108) a viewing behaviour of the driver (104) is analyzed in order to determine the degree of attention.

3. Method (500) according to Claim 2, in which the reading in step (510) driving situation information (232) which represents a driving situation of the vehicle (100) is read in, wherein in the determining step (520) the viewing behaviour is evaluated using the driving situation information (232) in order to determine the degree of attention.

4. Method (500) according to Claim 2 or 3, in which in the outputting step (530) the assistance signal (110) is output in order to actuate a collision warning function and/or automatic braking function and/or lane changing warning function and/or lane-keeping function (100) if the degree of attention represents a viewing direction of the driver (104) which faces away from a front region (1) and/or side region (2L, 2R, 3L, 3R) and/or a rear region (4) of the vehicle (100).

5. Device (102) with units (210, 220, 230) which is designed to carry out and/or actuate the method (500) according to one of Claims 1 to 4.

6. Computer program which is designed to carry out and/or actuate the method (500) according to one of Claims 1 to 4.

7. Machine-readable storage medium in which the computer program according to Claim 8 is stored.

## Revendications

1. Procédé (500) d'assistance à un conducteur (104) lors de la désactivation d'un mode de conduite hautement automatisé d'un véhicule (100), dans lequel le procédé (500) comprend les étapes suivantes :
lecture (510) d'un signal de prise de contrôle (212) représentant une prise de contrôle du véhicule (100) par le conducteur (104), et d'une information auxiliaire qui comprend une information d'image (108) représentant le conducteur (104) et/ou une information de contrôle du véhicule représentant un contrôle du véhicule (100) par le conducteur (104) ;
détermination (520) d'un niveau d'attention du conducteur (104) par utilisation du signal de prise de contrôle (212) et de l'information auxiliaire ; et
émission (530) d'un signal d'assistance (110) par utilisation du niveau d'attention pour aider le conducteur (104) à prendre le contrôle en activant au moins une fonction d'assistance au conducteur du véhicule (100),
dans lequel, à l'étape de détermination (520), un comportement de direction et/ou d'accélération du véhicule (100) est analysé par utilisation du signal de prise de contrôle (212) pour obtenir une valeur de qualité relative à la commande du véhicule (100) par le conducteur (104), dans lequel, à l'étape d'émission (530), le signal d'assistance (110) est émis par utilisation de la valeur de qualité,
**caractérisé en ce que**,
à l'étape d'émission (530), le signal d'assistance (110) est émis afin d'activer une fonction de maintien de voie du véhicule (100) lorsque la valeur de qualité représente une variation d'une position de voie du véhicule (100) se situant en dehors d'une plage de tolérance prédéterminée.

2. Procédé (500) selon la revendication 1, dans lequel, à l'étape de détermination (520), un comportement du regard du conducteur (104) est analysé par utilisation de l'information d'image (108) pour déterminer le niveau d'attention.

3. Procédé (500) selon la revendication 2, dans lequel, à l'étape de lecture (510), une information de situation de conduite (232) représentant une situation de conduite du véhicule (100) est lue, dans lequel, à l'étape de détermination (520), le comportement du regard est évalué par utilisation de l'information de situation de conduite (232) pour déterminer le niveau d'attention.

4. Procédé (500) selon la revendication 2 ou 3, dans lequel, à l'étape d'émission (530), le signal d'assistance (110) est émis afin d'activer une fonction d'avertissement de collision et/ou une fonction de freinage automatique et/ou une fonction d'avertissement de changement de voie et/ou une fonction de maintien de voie du véhicule (100), lorsque le niveau d'attention représente une direction de regard du conducteur (104) détournée d'une zone avant (1) et/ou latérale (2L, 2R, 3L, 3R) et/ou arrière (4) du véhicule (100).

5. Dispositif (102) comprenant des unités (210, 220, 230) qui sont conçues pour exécuter et/ou activer le procédé (500) selon l'une des revendications 1 à 4.

6. Programme d'ordinateur qui est conçu pour exécuter et/ou activer le procédé (500) selon l'une des revendications 1 à 4.

7. Support de stockage lisible par machine sur lequel est stocké le programme d'ordinateur selon la revendication 8.
